# EUROPEAN PATENT SPECIFICATION

(11) **EP 1 714 173 B1**
(45) Date of publication and mention of the grant of the patent: **02.06.2010**
(21) Application number: 04710935.0
(22) Date of filing: 13.02.2004
(51) Int. Cl.: G02B 6/00, B29D 11/00, B29C 39/14

(54) **METHOD OF MANUFACTURING A LIGHT GUIDE**
HERSTELLUNGSVERFAHREN EINES LICHTLEITERS
PROCEDE DE FABRICATION D'UN GUIDE LUMINEUX

(43) Date of publication of application: 25.10.2006
(73) Proprietor: Nokia Corporation, 02150 Espoo (FI)
(72) Inventor: ÖSTERGARD, Toni, FIN-20900 Turku (FI)
(74) Representative: Cohausz & Florack
(86) International application number: PCT/IB2004/000378
(87) International publication number: WO 2005/088367

(56) References cited:
- EP-A- 1 278 007
- GB-A- 468 893
- US-A- 5 735 988
- US-A- 2002 130 427
- US-A1- 2002 163 094
- US-A1- 2003 103 359
- ROSEWELL N A ET AL: "Flat panel virtual display" IEE PROCEEDINGS: OPTOELECTRONICS, INSTITUTION OF ELECTRICAL ENGINEERS, STEVENAGE, GB, vol. 149, no. 56, 11 November 2002 (2002-11-11), pages 189-192, XP006019262 ISSN: 1350-2433

## Description

### Field of the invention

The invention relates to a method for manufacturing a light guide, in particular a backlighting or frontlighting light guide for user interfaces of electronic devices. The invention also relates to an apparatus for manufacturing such a light guide.

### Background

Non-emissive display technologies, such as for consumer electronics, communication equipment, advertisements or signs and road signs, need an illumination system, making the display visible in low-light conditions. For providing illumination, different technologies are known. For transmissive, or partially transmissive (e.g. transflective) display technologies, such as for instance liquid crystal displays (LCD), it is known to illuminate the display with suitable light guides (LG). These light guides may be arranged behind the light modulating display, realizing a backlighting light guide. It is also known to form a so-called frontlighting light guide in front of a reflective display.

For providing a backlighting or frontlighting light guide, it is known to use diffractive optics. Such diffractive optics are known from EP 1 016 817. Accordingly, a known arrangement is to use "thick", "plate-like" light guides, on one end of which there is a light source, and on one flat side of the plate with the largest area and/or inside the light pipe there is a lighted object for achieving uniform illumination thereof.

Technologies with a thin, plate-like light guide, from one end of which a light source emits light to the space between the upper and lower surface of the light guide, are known. The bottom of the light guide may be randomly or continuously roughened. This roughened surface allows the illumination of a display or a corresponding object positioned above the upper surface of the light guide, in the direction of the viewer. Roughening one surface allows the light to be scattered as uniformly as possibly in the direction of the display. Roughening may be carried out randomly or continuously. Such diffractive light guides allow even illumination of displays. However, roughening the surface randomly may cause problems with the homogeneity of the light.

From US 6,598,987 a system for distributing light within a thin light guide is known. This system uses diffractive gratings as a means to optically couple the light from a source, such as light emitting diodes (LED), to the light guide. By use of diffractive gratings and the like, as a coupling mechanism, the light guide can be reduced considerably in thickness while increasing the coupling efficiency. To allow coupling of light into the light guide, a system is provided which utilises lighting from an array of LEDs through the circuit board. The light is coupled into the light guide by the use of input diffractive optical elements (DOE), such as diffraction gratings associated with the light guide. In the case where the light guide is thicker (e.g. approximately as thick as or thicker than the height of the LEDs) the in-coupling can be achieved with LEDs at one side of the light guide, so called side firing, while at the same time using a diffractive grating to couple light out evenly from the specified area of the light guide.

Utilising appropriate optical relationships, an input grating pattern is designed, which takes into consideration the angular spectrum and dimensions of the LED, the dimensions and composition of the light guide, and the amount of light required. Diffraction gratings are constructed on the upper or lower side of the light guide, depending on which side the light source is positioned to receive the light emitted from the diode. These gratings provide diffraction of the light in accordance with the characteristics of the light guide to cause an efficient distribution of the light within the light guide. For providing the diffraction gratings into the light guide, a master grating pattern is constructed e.g. by means of electron beam lithography, and replicated onto the light guide in the molding or pressing process of the light guide. The "master" is usually not used directly, but a replication thereof. By that the master can be used to make a new "mold" in case of "failures". This will allow the light guide to be manufactured with integral in-coupling and out-coupling diffraction gratings, and allows providing light guides having a thickness range between 0,2 to 1,5 mm. However, thinner and thicker light guides are also possible.

A molding process for producing light guides is, for example, known from US 2002/0163094 A1. According to the disclosed method, an elongated light guide is produced using a moving mold assembly. To the mold assembly, a thermosettable material is provided, which is then molded in the movable mold parts. The molded light guide is then removed from the mold assembly.

However, a drawback of pressing or molding the diffractive gratings into the light guides is that the process is not continuous. Furthermore, when molding or pressing the diffractive gratings into the light guide, further optical films have to be added to the light guide in an additional production step. This production step causes further cost and is time-consuming.

### Summary of the invention

To overcome these drawbacks, the invention proposes a method for manufacturing a light guide, in particular a backlighting or frontlighting light guide for user interfaces of electronic devices, wherein a light guiding substrate is continuously provided as a foil, and wherein diffractive gratings are embossed on at least one side of said foil by rolling wherein additional optical films are provided continuously from a bobbin and partially laminated onto said embossed foil after said rolling.

Said light guiding substrate is any substance, which allows efficient light guiding and is known in the art. Providing this substrate as a foil allows continuous provision of light guiding material. Said foil may be further processed continuously by rolling. Rolling allows embossing diffractive gratings on at least one side of said foil. Thereby, light guides may be manufactured within a continuous process. The thickness of the plastic substrates being used may be between 0,5 and 0,6 mm or less. Physically, only the wavelength of the used light will restrict the thickness of the light guide, and thus e.g. 0.1-0.2 mm thick light guides are possible, if light can be coupled in in an efficient way, e.g. by using diffractive in-coupling elements. The "printing" of diffractive gratings may thus be done in a continuous web. In particular foils with a thickness between 0,1 mm and 3 mm are preferred. However, thicker foils are also possible. In such a case, it is particularly preferred to provide the foil as sheets rather than from bobbins.

A continuous pattern of the light guides (i.e. the individual light guides that later on are cut out from the web) are based on diffractive gratings/patterns within a certain sized area (e.g. 3 cm x 2 cm). This area may then be reproduced on the continuous web as often as it has room (with the required border area and mechanical design in consideration).

In case of diffractive light guides it may not be appropriate to use the word "roughening" since this often refers to a "random or chaotic" surface structure. The grooves in a diffractive pattern may have a well defined dimensions (depth and width) and the pattern is then mathematically calculated to provide the optimal performance (e.g. for a certain out coupling area and thickness of light guide).

When said diffractive gratings are embossed into said foil in a continuous pattern, the resulting light guide may have improved optical characteristics. It may, however, be possible to emboss a discontinuous pattern into said foil .This may be done by adjusting discontinuously said rolling rolls according to the desired pattern. Nevertheless, it may be possible to emboss the diffractive gratings continuously with a continuous pattern, when the rolls provide a continuous embossing pattern.

A backlighting light guide is positioned behind a display, through which the light is transmitted. Also possible is a frontlighting light guide. Such a light guide is positioned in front of a display, which reflects the light from the light guide.

To provide said foil continuously, it is proposed that said foil is provided for rolling from a bobbin. Thus, the length of the foil to be embossed may only be limited by the size of the bobbin.

To improve the optical characteristics of said light guide, it is proposed that additional optical films are partially laminated onto said embossed foil after rolling. This may be done within a single processing step. The plastic substrate may be provided from a bobbin, guided through an embossing unit, where it is rolled, thereafter the optical films are provided, for instance on either side of the foil, and in a lamination unit, the final light guiding foil is laminated.

To cope with the continuous provision of said foil, it is proposed that also said additional optical films are provided for lamination continuously from a bobbin. In case of a frontlighting light guide, the laminated foils might only be protective layers on at least one side.

Preferably, the length of the optical film and the foil are equally sized. This allows processing a light guide continuously.

Laminating said additional optical films partially onto said embossed foil by heating and/or glueing is also proposed. Any other laminating procedure, however, is within the scope of the invention.

As the foils cannot be laminated together over the whole area, since this might destroy the function of the light guide, it is proposed that said optical films are laminated onto said foil at least partially along the outer edges of said foil or at least partially at corners of segments of said foil or any suitable locations. Laminating the foils together at specific points or areas along the borders of the light guide provides good results.

Improved optical properties of said light guide are provided by laminating additional optical films onto at least one side of said foil. This may be done on a first or a second side of said foil.

It is proposed that on the side where the optical gratings are embossed, at least a diffuser film and/or a brightness enhancement film (BEF) is laminated. It is also proposed that on the other side of said foil, a reflector film is laminated. The optical performance of the display system, including the light guide, is improved by using the optical films. The brightness and other optical properties of the light guide may be improved by adding diffusers and brightness enhancement films. In case of a frontlighting light guide, it is preferred to laminate at least one protective film on the front side of the foil. The films may be polycarbonate or PMMA.

In case of diffractive out coupling the light guide system is preferably assembled so that starting from the bottom, first the reflector, then the light guide, with the diffractive pattern on the side that faces the reflector (i.e. downwards), then on top of the light guide two brightness enhancement films (and possibly some other optical films) are arranged. However, both ways to orient the light guide, i.e. diffractive grating downwards/upwards, are possible. Which orientation is used depends on the "preferences", such as the application to which the inventive light guide is applied.

When all foils have been laminated, the light guides may be separated from the continuous foils by cutting, laser cutting, and/or stamping. Therefore it is proposed that individual light guides of said foil are separated from said foil by stamping or cutting. It may be preferable to combine the lamination with the separation of the light guides into a single step. Therefore it is proposed that said individual light guides are separated from said foil during lamination. That means that lamination and cutting/stamping tools are arranged at specific locations where processing the foils simultaneously is possible.

Coupling-in of light from LEDs which are arranged perpendicular to or at any other angular distribution to the surface of the foil is enabled, when diffractive coupling gratings are embossed into said foil by said rolling, so as to provide coupling of light from lighting elements emitting light substantially perpendicularly to said surface of said foil into said foil. Said diffractive coupling gratings are arranged so as to provide good in-coupling properties. In-coupling is preferred in case the light guide is thin, i.e. much thinner than the height of the LEDs. Otherwise, with a thicker light guide, it may still be possible to use "side firing" LEDs at one edge/side of the light guide.

To allow superior in-coupling properties, holes for the LEDs may be stamped, or cut out of the additional foils during the same process in which the light guide is cut or stamped from the foil. Therefore, it is proposed that through holes are cut out of at least one of said optical films at positions of said diffractive coupling gratings during segmentation of said light guides. Fast production is possible, when said foil is rolled at a speed between 0,1 to 100m/min, or any other suitable speed. A preferred speed is 15 m/min.

In case the through holes are used together with LEDs emitting light sidewise, i.e. side firing LEDS, it is preferred that the LEDs are placed completely within the light guide, i.e. the holes are preferably stamped through all layers, or at least embossed so deep into the light guide that the LED is substantially completely embedded into the light guide.

If a diffractive in-coupling element is used to couple in light into a very thin light guide, a hole would first be cut/stamped in at least one of the additional "optical films" in such a way that the opening in these additional film(s) would be at the position of the in-coupling diffractive element, before the lamination is done.

It is also preferred that said gratings are embossed by rotogravure, offset or flexo-printing, which are known rolling methods. It may also be possible/ to strap a shim around a role in a hot press to emboss the gratings. Also preferred is the use of rolling techniques capable of patterning the embossing role directly. This may be done by direct laser patterning or developing a custom embossing role. These customising techniques may be used instead of strapping the embossing plate (or shim) around an embossing role.

Further proposed is to use embossing plates where the height of the gratings is between 0,1 and 1 µm. However, higher surface reliefs may also be possible. Higher/deeper gratings may be used if temperature, pressure, and "printing" speed, are adjusted accordingly to the more demanding embossing of deeper gratings.

Preferred materials to be used within said foil and/or said optical films are Polycarbonate, Polymethylacrylate, Polyvinylchloride, Polyethylene, Polyethylenterephthalate, or thermoplastic Polyester. These materials as well as compositions thereof may be used for the foil and the films.

To allow good out-coupling of light, it is proposed that said foil and/or said optical films have a refractive index between 1,3 and 1,8. Different refractive indices may also be within the scope of the invention.

As previously mentioned, the rolling process may be adjusted by adjusting the rolling temperature. Therefore, it is proposed that the rolling temperature is adjusted to allow embossing said gratings into said foil at rolling speed.

In order to allow flexible design of diffractive light guides, it is proposed that parts of said foil comprise diffractive gratings and that other parts of said foil comprise other elements, such as electric, electronic and/or opto-electronic components. These are printed onto said parts of said foil. Therefore, the foil may be used as a substrate for printed circuits. Printed conductive lines, printed resistors, capacitors, or even printed transistors may be printed onto said foil along with said gratings. The printing process may be integrated into the same process as the rolling. Printing electric, electronic or opto-electronic components could be based on rolling processes within a separate roll or within an additional printing process prior to or after rolling the gratings. Additional printing processes may be ink-jet or screen printing processes. Thus, the foil may be used as a flexible printed wiring board.

It is also proposed that parts of said foil are extended to be used as means for transporting optical signals and/or light to out-coupling elements. This may be used for data transfer or to transport light to further elements where light is to be coupled out. This may be light to be coupled out at keys of mobile phones.

The use of the rolling process allows mass-manufacturing of light guides. It is possible to laminate different foils together in the same process. The thickness of plastic substrates used for an inventive method of manufacturing a light guide may be up to 0,5 mm thick, or even thicker. This would allow the use of a light guide substrate with side firing LEDs. It would even allow working with 0.6 mm thick LEDs, which are currently available. Furthermore, the LEDs may be higher than the thickness of the light guide, but this might reduce the efficiency of the in-coupling. Even thinner light guides are possible. In this case it might be preferred to use diffractive in-coupling elements, which are embossed into said foil. The rolling process may be used to emboss diffractive light guides and to laminate additional optical foils in a single, and extremely cost efficient mass-manufacturing process.

A further aspect of the invention is an apparatus for manufacturing a light guide, in particular a backlighting or frontlighting light guide for user interfaces of electronic devices, comprising: first supply means providing continuously a light guide substrate as a foil, rolling means for embossing diffractive gratings on at least one side of said foil second and/or third supply means providing continuously additional optical films on either side of said foil, and lamination means laminating said additional optical films onto said embossed foil after rolling.

This apparatus allows mass-manufacturing of light guides in a rolling process.

### Brief description of the drawings

The invention is described in more detail below with reference to the drawings. The drawings show:
- Fig. 1: a schematic illustration of an inventive apparatus;
- Fig. 2a,b: light guiding segments with lamination points;
- Fig. 3: a sectional view of a display device with a light guide;
- Fig. 4: a schematic illustration of UV-lithography providing a master;
- Fig. 5: segmentation of light guides;
- Fig. 6: different segments of light guides;
- Fig. 7: cutting light guide segments into lengths;
- Fig. 8: a light guiding means to transport light to keys;
- Fig. 9: a flexible printed circuit board with diffractive gratings.

### Detailed description of the drawings

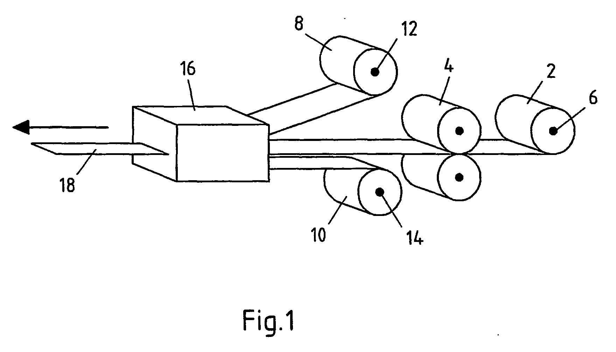

Fig. 1 depicts an apparatus for rolling a light guide according to the invention. The apparatus comprises bobbins 6, 12, 14, a rolling unit 4, and a lamination unit 16.

Further depicted are a foil of light guiding substrate 2, a first optical film 8, a second optical film 10 and a resulting light guide system 18.

The resulting light guide system 18 is manufactured as follows. From said bobbin 6, a foil of light guiding substrate is provided continuously to rolling unit 4. Within rolling unit 4, said foil 2 is embossed by rolling to incorporate diffractive gratings onto at least one side of said foil 2. Said diffractive gratings allow a controlled and even out-coupling of light from said light guide 18. The pattern of said diffractive gratings is mathematically calculated to provide the optimal optical performance for the particular design and light guide thickness. Within said gratings, diffractive and in/out-coupling elements may be included. The grating may be different, i.e. optimised for different purposes.

After rolling said foil 2 within rolling unit 4, bobbins 12, 14 provide optical films 8, 10 on either side of said foil 2. Optical film 8 may be a diffuser film or a Brightness Enhancement Film (BEF). Furthermore, Optical film 8 may be replaced with two optical films, such as Brightness Enhancement Films (BEF) oriented with a 90 degree tilt with respect to each other, i.e. one is oriented parallel to the "direction of the light guide", and the other perpendicular to this direction. It may also be possible to provide more than one bobbin 12, which enables the provision of more than one optical film 8 onto one side of said foil 2. On the lower side of said foil 2, a further optical film 10, which may be a reflector film, is provided. Continuously providing said foil 2 with said optical films 8, 10 to said lamination unit 16 allows a continuous manufacturing of light guide 18. The optical films need not be clearly transparent.

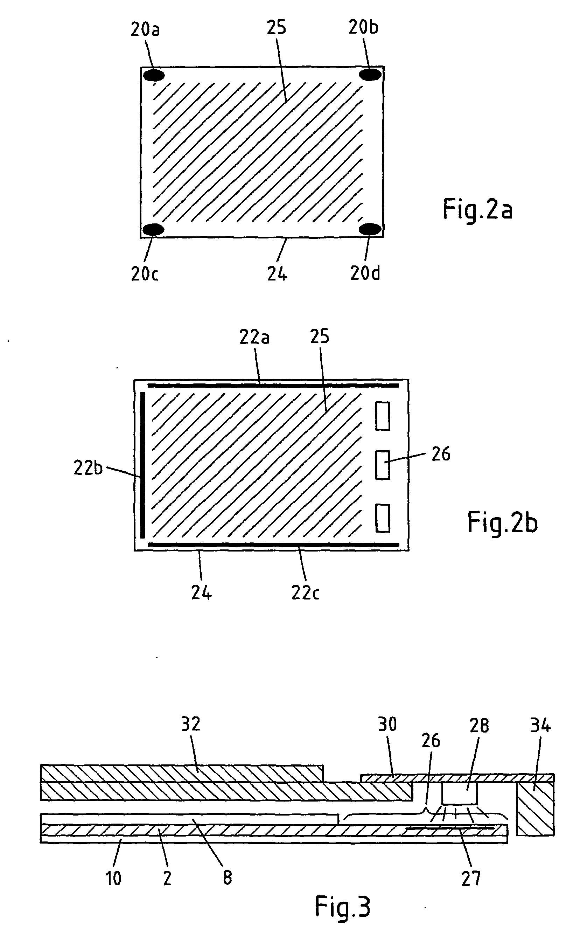

Within lamination unit 16, the foil 2 is laminated with said optical films 8, 10. Within lamination unit 16, an individual light guide system 18 may be cut out or stamped (not depicted) from said laminated foils. This allows integrated manufacturing of individual light guides, as depicted in figure 2.

Embossing the diffraction gratings into said foil and further processing the foil by laminating allows mass-production of light guides.

Figure 2a depicts an individual light guide 24 in a top view. Diffractive elements are depicted schematically in said light guide as diagonally running lines. On said foil 2, said optical films 8, 10 are laminated not entirely over the whole surface, but instead only at certain lamination points 20. As depicted in figure 2a, the lamination points 20 may be located at the corners of each light guide segment 24.

Figure 2b depicts similarly a light guide segment 24. However, the foil 2 is laminated with the optical films 8, 10 slightly differently. As depicted, lamination segments 22 run along the edges of the segment 24, thus securing the foil 2 with the optical films 8, 10 appropriately. Further depicted in figure 2b are through holes 26. These through holes 26 allow in-coupling of light from upwardly or side-firing LEDs. If diffractive in-coupling elements are used, the holes may illustrate openings in at least one of the optical films, thus exposing said diffractive in-coupling element in said light guide. That is, the "through holes" (i.e. the openings in the optical films) 26 may be arranged such that they are located at positions/ where in-coupling gratings are embossed into said foil 2. For side-firing LEDs, the through holes may be cut through the whole light guide, or at least deep enough so that the LEDs can be embedded completely into the light guide.

Figure 3 depicts a sectional view of a display of a user device, in particular a mobile hand-held telecommunication device. Depicted are said foil 2, with said optical films 8, 10 laminated on either surface of said foil 2. Further depicted are a through hole 26, a diffractive in-coupling element 27, a light emitting diode 28, a flexible printed wiring board 30, a liquid crystal display 32 and a connector 34.

Connector 34 connects said flexible printed wiring board (PWB) 30 with a power supply and further wirings. On PWB 30 an upwardly firing LED 28 is installed, emitting light onto the surface of said foil 2. As can be seen in Figure 3, optical film 8 has a through hole 26 at the position of diffractive in-coupling element 27. This allows in-coupling of light from said LED 28 into said foil 2. By in-coupling the light of LED 28 through diffractive in-coupling element 27 into light guide 2, the LCD 32 may be backlighted. However, it may also be possible to use side-firing LEDs at one edge/side of the light guide, in particular if the light guide is thick enough. In such a case a diffractive in-coupling element may be omitted.

To enhance lighting properties, foil 2 is laminated with optical films 8 and 10. Optical film 10 may be a reflector, whereas optical film 8 may be a diffuser or a BEF, or two BEFs properly oriented, or both.

The light guide comprising foil 2, and optical films 8, 10 may be produced in a mass-production process according to the inventive method. This reduces production costs enormously. By rolling diffractive elements onto said foil 2, a continuous process is possible. Furthermore, within the same process, optical films 8, 10 may be laminated onto said foil 2 and individual light guides may be cut or stamped from the continuous foil.

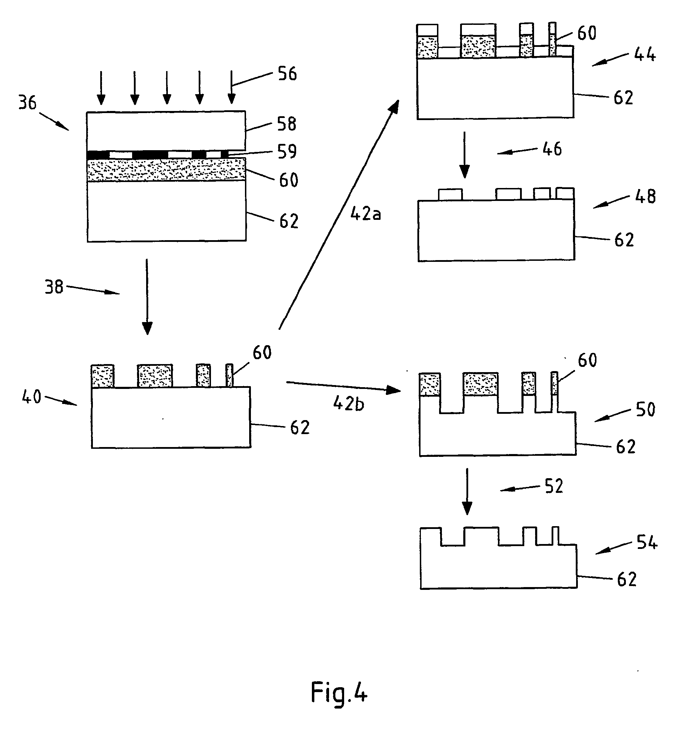

Figure 4 depicts a method for a etching a rolling master. Steps 36-54 are depicted schematically; a final structure is etched from a photoresist layer 60. In a first step 36, UV-light 56 is directed to a substrate 62 with a photoresist layer 60, an etching mask 59 and a mask substrate 58. By exposing the photoresist layer 60 with UV-light 56, the etching mask 59 may be mapped onto the photoresist layer 60.

In a developing step 38, the mask 59 is developed, thereby producing regions with photoresist layer 60 and regions without. The resulting structure is depicted in step 40.

Thereafter, two possible methods 42a, 42b allow the creation of a final structure.

In a material deposition method 42a, material may be deposited onto the remaining photoresist layer 60 in step 44. The deposited material allows the remaining photoresist layer 60 to be lifted off in step 46. The resulting structure 48 comprises gratings which may represent the final diffractive grating pattern or a negative of the intended diffractive pattern.

In an etching process 42b, the substrate 62 together with the photoresist layer 60 is exposed to an etching agent. As a result, substrate 62 is removed at positions where no photoresist layer 60 is on the substrate 62. After removing the photoresist layer 60 in step 52, a final structure 54 is achieved. Again, this structure may be the final diffractive gratings or a negative of these.

The manufacturing of diffractive gratings may be based on standard lithography methods, as depicted in Figure 4. Alternatively, the manufacturing of the surface reliefs may be based on a direct writing technique, such as laser beam or electron beam writing without a shadow mask as in the case of UV-lithography. The produced gratings may represent the final diffractive gratings, or may be a negative of the intended diffractive gratings.

The substrate with the diffractive gratings manufactured in a method according to Figure 4 may often be referred to as master. A master may then be replicated onto a substrate directly, or first copied for use in manufacturing of a multitude of objects with the same surface structure. The manufacturing of such masters, using the above mentioned techniques, as well as the replication or copying of such masters is known from "Diffractive optics: For Industrial and Commercial Applications", Jari Turunen, Frank Wyrowski, Akademieverlag GmbH, Berlin 1997. The master as used in the mass-manufacturing process may often be referred as the shim, stamper, roller or other, depending on which method is used in the mass-manufacturing process.

In order to realise embossing by rolling, the diffractive grating pattern has to be copied to a roller plate, which is then strapped around an embossing roll. Depending on the size of the plate, the designed pattern, or a number of similar patterns, may be manufactured directly onto the plate using one of the above-mentioned manufacturing processes. In case the number of replicas to be manufactured is large, it may also be preferable to use more than one master. Alternatively, if the plate is large, or exceeds the size that may be used in the creation of the original master, a smaller sized master may be used for copying the same pattern several times onto said plate.

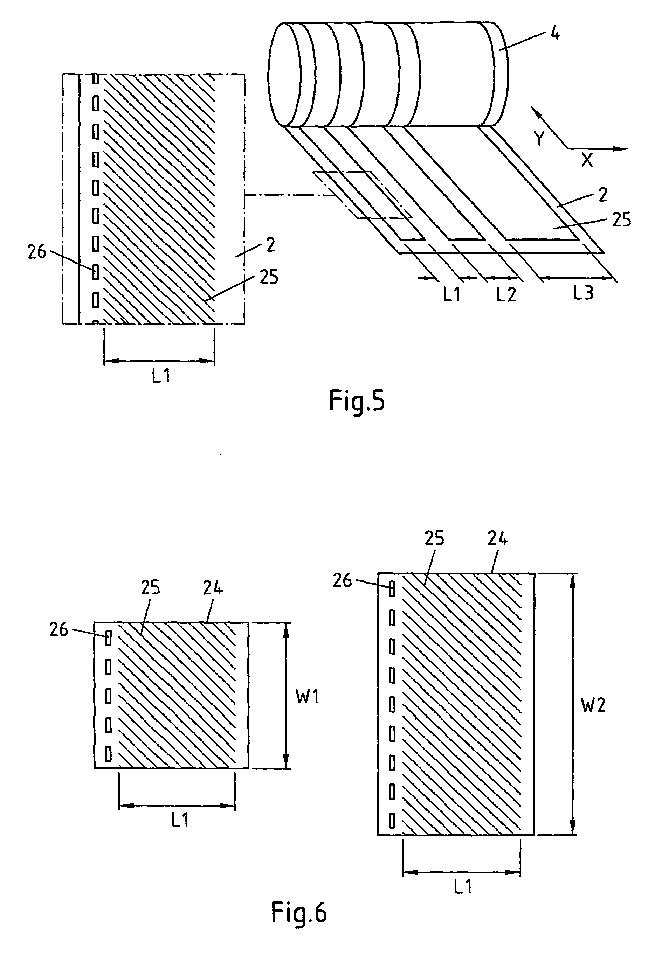

Figure 5 depicts schematically the manufacture of different continuous diffractive grating patterns, which may be cut into suitable sizes. The foil 2 is rolled into more than one continuous stripe of diffractive grating patterns L1, L2, and L3. Different lengths of the light guides may account for different LEDs, firing light with different intensity into the light guides. By rolling different continuous diffractive grating patterns of various "optical length" L1, L2, L3, a large variation in light guide sizes may be cut out from the same web. The light guide dimensions available from a single rolling unit may thus range from a light guide for small mobile phones to large LCD televisions, or any large sign and/or poster requiring a backlight or frontlight. The diffractive out-coupling design is naturally optimised separately for each "optical length" and/or substrate material, and/or light source to be used.

Figure 6 depicts light guides with different widths w1, w2. The different widths w1, w2 may be achieved by cutting the web into different lengths.

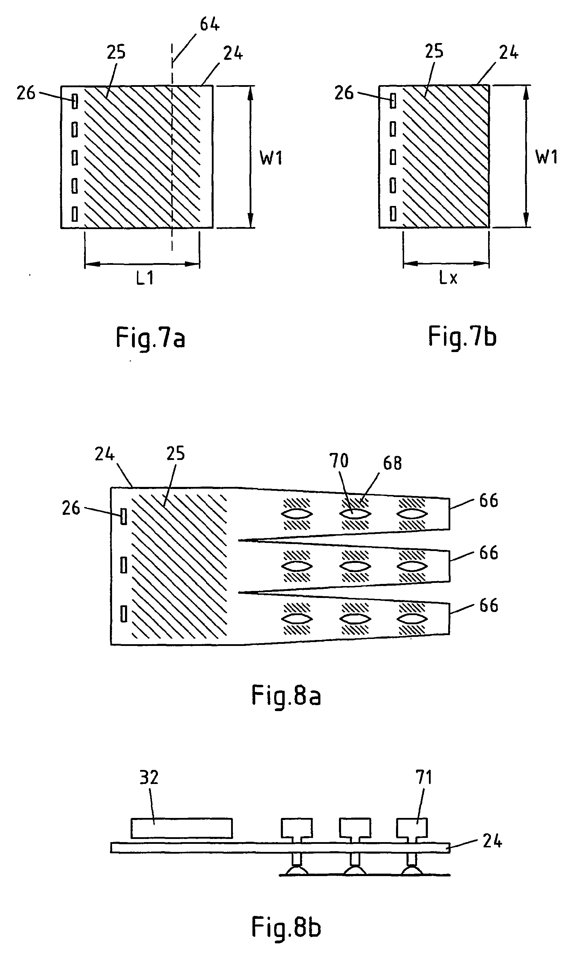

It is even possible to size a light guide by shortening the optical length of the light guide in the x-direction. As depicted in Figure 7a, a light guide with an optical length L1 may be cut at cutting line 64. The resulting light guide is depicted in Figure 7b, having an optical length of Lx. Even though a larger amount of light will leak out at the end of the shortened light guide, this may be a cheap way of creating light guides with different optical lengths.

Figure 8 depicts an extended light guide. Figure 8a depicts a top view, and figure 8b depicts a side view. The known light guide is extended by extensions 66. These extensions 66 allow guiding light not being coupled out by the gratings for the display to locations, where it is needed. At these locations, the light may be coupled out by out-coupling gratings 68. This may be used for coupling out light for a key pad illumination or illumination for decorative purposes.

As depicted in Figures 8a and 8b, at the positions of diffractive out-coupling gratings 68, holes 70 are provided for keys 71, allowing actuating switches on a circuit board.

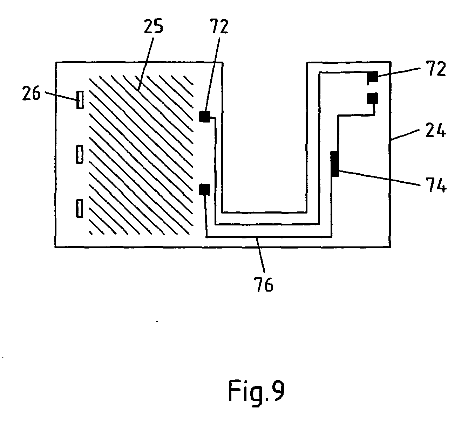

Extensions of the light guide substrate may also be used as a substrate for printed circuits. This is depicted in Figure 9. The substrate, into which the diffractive gratings 25 are embossed, may also serve as a substrate for printed conductive lines 76, printed resistors 74, capacitors (not depicted), or even printed transistors (not depicted). Printing of electronic circuits onto a substrate is known and may be processed while rolling the diffractive gratings 25.

The inventive method allows integrated mass-production of light guides where different foils are laminated and a light guide is embossed with diffractive elements. Furthermore, in-coupling elements and through holes may be provided and the light guide may be designed according to the needs of the electronic device, to which backlighting, or frontlighting should be provided.

### List of reference numbers:

- 2: foil
- 4: rolling unit
- 6: bobbin
- 8: optical film
- 10: optical film
- 12: bobbin
- 14: bobbin
- 16: lamination unit
- 18: light guide system
- 20: lamination points
- 22: lamination sections
- 24: light guide segment
- 25: diffractive gratings
- 26: through-hole
- 27: diffractive in-coupling element
- 28: LED
- 30: flexible PWB
- 32: LCD
- 34: connector
- 36: UV-exposure
- 38: developing
- 40: resulting structure
- 42a: material deposition
- 42b: etching
- 44: deposited material
- 46: lift-off
- 48: final structure
- 50: etched structure
- 52: remove resistant layer
- 54: final structure
- 56: UV-light
- 58: mask substrate
- 59: mask
- 60: photoresist layer
- 62: substrate
- 64: cutting line
- 66: extended light guide
- 68: diffractive out-coupling
- 70: holes
- 71: keys
- 72: contact pads
- 74: printed resistor
- 76: printed conducting lines

## Claims

1. A method for manufacturing a light guide (18), in particular a backlighting or frontlighting light guide for user interfaces of electronic devices,
wherein a light guiding substrate is continuously provided as a foil (2),
wherein diffractive gratings (25) are embossed on at least one side of said foil (2) by rolling,
wherein additional optical films (8, 10) are provided continuously from a bobbin (12, 14) and partially laminated onto said embossed foil (2) after said rolling.

2. The method of claim 1, wherein said diffractive gratings (25) are embossed into said foil (2) in a continuous pattern.

3. The method of any one of claims 1 or 2, wherein said foil (2) is provided for rolling continuously from a bobbin (16).

4. The method of claim 1, wherein said additional optical films (8, 10) are partially laminated onto said embossed foil (2) by heating and/or glueing.

5. The method of any one of claims 1 to 4, wherein said optical films (8, 10) are laminated onto said foil (2) at least partially along the outer edges of said foil.

6. The method of any one of claims 1 to 5, wherein said optical films (8, 10) are laminated onto said foil (2) at least partially at corners of segments of said foil (2).

7. The method of any one of claims 1 to 6, wherein said lamination includes laminating additional optical films (8, 10) onto at least one side of said foil (2).

8. The method of any one of claims 1 to 7, wherein a first optical film (8) is laminated onto a first side of said foil (2).

9. The method of claim 8, wherein said first optical film (8) a diffuser film and/or a brightness enhancement film.

10. The method of any one of claims 1 to 9, wherein a second optical film (10) is laminated onto a second side of said foil (2).

11. The method of claim 10, wherein said second optical film (10) is a reflector film.

12. The method of any one of claims 1 to 11, wherein individual light guides (24) are separated from said foil (2) by stamping or cutting.

13. The method of any one of claims 1 to 12, wherein individual light guides (2) are separated from said foil (2) during lamination.

14. The method of any one of claims 1 to 13, wherein diffractive in-coupling gratings (27) are embossed into said foil (2) by said rolling, so as to provide coupling in of light from lighting elements that emit light having a certain angular distribution to wards said surface of said foil and into said foil (2).

15. The method of claim 14, wherein through holes (26) are cut out of at least one of said optical films (8, 10) at the positions of said diffractive in-coupling gratings (27) during segmentation of said light guides.

16. The method of any one of claims 1 to 15, wherein through holes (26) are cut out of at least parts of individual light guides at positions where side firing lighting elements are to be positioned, to enable in-coupling of light into said light guide by side firing lighting elements.

17. The method of any one of claims 1 to 16, wherein said foil (2) is rolled at a speed between 0,1 - 100 m/min.

18. The method of any one of claims 1 to 17, wherein said gratings (25) are embossed by rotogravure offset or flexo-printing.

19. The method of any one of claims 1 to 18, wherein the height of said gratings (25) is between 0,1 to 1 µm.

20. The method of any one of claims 1 to 19, wherein said foil (2) and/or said optical films (8, 10) comprise at least one of the materials Polycarbonate (PC), Polymethylacrylate (PMMA), Polyvinylchloride (PVC), Polyethylene (PE), Polyethyleneterephthalate (PET), or thermoplastic Polyester.

21. The method of any one of claims 1 to 20, wherein said foil (2) and/or said optical films (8, 10) have a refractive index between 1,3 and 1,8.

22. The method of any one of claims 1 to 21, wherein a rolling temperature is adjusted to allow embossing said gratings (25) into said foil (2) at rolling speed.

23. The method of any one of claims 1 to 22, wherein said diffractive gratings (25) are embossed into parts of said foil (2) and wherein electronic and/or opto-electronic components (71-76) are printed onto parts of said foil (2).

24. The method of claim 23, wherein said electronic and/or opto-electronic components (71-76) are printed onto said foil (2) by an additional rolling process and/or an additional printing process.

25. The method of any one of claims 1 to 24, wherein parts of said foil (2) are extended to be used as means for transporting optical signals and/or light to out-coupling elements (68).

26. An apparatus for manufacturing a light guide, in particular a backlighting or frontlighting light guide for user interfaces of electronic devices, comprising: first supply means (6) providing continuously a light guiding substrate as a foil (2),
rolling means (4) for embossing diffractive gratings (25) on at least one side of said foil (2),
second and/or third supply means (12, 14) providing continuously additional optical films (8, 10) on either side of said foil (2), and
lamination means (16) laminating said additional optical films (8, 10) onto said embossed foil (2) after rolling.

27. The apparatus of claim 26, with a bobbin (6) providing said foil (2) substantially continuously.

28. The apparatus of any one of claims 26 to 27, with cutting means cutting individual light guides from said foil (2) after laminating said foil (2) with said additional optical films (8, 10).

29. The apparatus of any one of claims 26 to 28, with stamping means stamping individual light guides from said foil (2) after laminating said foil (2) with said additional optical films (8, 10).

30. The apparatus of any one of claims 28 or 29, wherein said cutting means or said stamping means are integrated within said lamination means (16), segmenting said foil (2) during lamination.

## Patentansprüche

1. Verfahren zur Herstellung eines Lichtleiters (18), insbesondere eines Hintergrundbeleuchtungs- oder Vordergrundbeleuchtungslichtleiters für Benutzerschnittstellen von elektronischen Geräten, bei dem ein lichtleitendes Substrat kontinuierlich als Folie (2) bereitgestellt wird,
bei dem auf wenigstens einer Seite der Folie (2) durch Walzen lichtbrechende Gitter (25) geprägt werden,
bei dem zusätzliche optische Beläge (8, 10) kontinuierlich von einer Spule (12, 14) bereitgestellt und nach dem Walzen teilweise auf die geprägte Folie (2) laminiert werden.

2. Verfahren nach Anspruch 1, bei dem das lichtbrechende Gitter (25) als kontinuierliches Muster in die Folie (2) eingeprägt wird.

3. Verfahren nach einem der Ansprüche 1 oder 2, bei dem die Folie (2) zum kontinuierlichen Walzen von einer Spule (16) bereitgestellt wird.

4. Verfahren nach Anspruch 1, bei dem die zusätzlichen optischen Beläge (8, 10) durch Erhitzen und/oder Kleben teilweise auf die geprägte Folie (2) laminiert werden.

5. Verfahren nach einem der Ansprüche 1 bis 4, bei dem die optischen Beläge (8, 10) wenigstens teilweise entlang den Außenrändern der Folie auf die genannte Folie (2) laminiert werden.

6. Verfahren nach einem der Ansprüche 1 bis 5, bei dem die optischen Beläge (8, 10) wenigstens teilweise an Ecken von Segmenten der Folie (2) auf die Folie (2) laminiert werden.

7. Verfahren nach einem der Ansprüche 1 bis 6, bei dem das Laminieren das Laminieren zusätzlicher optischer Beläge (8, 10) auf wenigstens eine Seite der Folie (2) umfasst.

8. Verfahren nach einem der Ansprüche 1 bis 7, bei dem ein erster optischer Belag (8) auf eine erste Seite der Folie (2) laminiert wird.

9. Verfahren nach Anspruch 8, bei dem der erste optische Belag (8) ein Diffusorbelag und/oder ein Belag zur Verbesserung der Helligkeit ist.

10. Verfahren nach einem der Ansprüche 1 bis 9, bei dem ein zweiter optischer Belag (10) auf eine zweite Seite der Folie (2) laminiert wird.

11. Verfahren nach Anspruch 10, bei dem der zweite optische Belag (10) ein Reflektorbelag ist.

12. Verfahren nach einem der Ansprüche 1 bis 11, bei dem einzelne Lichtleiter (24) durch Stanzen oder Schneiden aus der Folie (2) herausgetrennt werden.

13. Verfahren nach einem der Ansprüche 1 bis 12, bei dem einzelne Lichtleiter (2) während des Laminierens aus der Folie (2) herausgetrennt werden.

14. Verfahren nach einem der Ansprüche 1 bis 13, bei dem durch das Walzen lichtbrechende Einkopplungsgitter (27) in die Folie (2) geprägt werden, um die Einkopplung von Licht von Licht abstrahlenden Beleuchtungselementen, die eine gewisse winklige Verteilung haben, in Richtung auf die Oberfläche der Folie und in die Folie (2) bereitzustellen.

15. Verfahren nach Anspruch 14, bei dem während der Segmentierung der Lichtleiter an den Positionen der lichtbrechenden Einkopplungsgitter (27) durchgehende Löcher (26) aus wenigstens einem der optischen Beläge (8, 10) ausgeschnitten werden.

16. Verfahren nach einem der Ansprüche 1 bis 15, bei dem durchgehende Löcher (26) wenigstens aus Teilen von einzelnen Lichtleitern an Positionen ausgeschnitten werden, an denen seitlich abstrahlende Beleuchtungselemente zu positionieren sind, um die Einkopplung von Licht in den Lichtleiter durch seitlich abstrahlende Beleuchtungselemente zu ermöglichen.

17. Verfahren nach einem der Ansprüche 1 bis 16, bei dem die Folie (2) mit einer Geschwindigkeit von 0,1 bis 100 m/min gewalzt wird.

18. Verfahren nach einem der Ansprüche 1 bis 17, bei dem die genannten Gitter (25) im Rotationstiefdruck-Offsetdruck- oder Flexodruckverfahren geprägt werden.

19. Verfahren nach einem der Ansprüche 1 bis 18, bei dem die Höhe der genannten Gitter (25) zwischen 0,1 und 1 µm beträgt.

20. Verfahren nach einem der Ansprüche 1 bis 19, bei dem die Folie (2) und/oder die optischen Beläge (8, 10) wenigstens eines der Materialien Polycarbonat (PC), Polymethylacrylat (PMMA), Polyvinylchlorid (PVC), Polyethylen (PE), Polyethyleneterephthalat (PET) oder thermoplastisches Polyester sind.

21. Verfahren nach einem der Ansprüche 1 bis 20, bei dem die Folie (2) und/oder die optischen Beläge (8, 10) einen Brechungsindex zwischen 1,3 und 1,8 haben.

22. Verfahren nach einem der Ansprüche 1 bis 21, bei dem eine Walztemperatur so eingestellt wird, dass die Gitter (25) bei Walzgeschwindigkeit in die Folie (2) geprägt werden können.

23. Verfahren nach einem der Ansprüche 1 bis 22, bei dem die lichtbrechenden Gitter (25) in Teile der Folie (2) eingeprägt werden und bei dem elektronische und/oder optoelektronische Bauteile (71 - 76) auf Teile der Folie (2) aufgedruckt werden.

24. Verfahren nach Anspruch 23, bei dem die elektronischen und/oder optoelektronischen Bauteile (71 - 76) durch einen zusätzlichen Walzprozess und/oder einen zusätzlichen Druckprozess auf die genannte Folie (2) aufgedruckt werden.

25. Verfahren nach einem der Ansprüche 1 bis 24, bei dem Teile der Folie (2) verlängert werden, um als Mittel zum Transportieren optischer Signale und/oder Licht zu Auskopplungselementen (68) verwendet zu werden.

26. Vorrichtung zur Herstellung eines Lichtleiters, insbesondere eines Hintergrundbeleuchtungs- oder Vordergrundbeleuchtungslichtleiters für Benutzerschnittstellen von elektronischen Geräten, umfassend:
erste Zuführmittel (6), die kontinuierlich ein lichtleitendes Substrat als Folie (2) bereitstellen, Walzmittel (4) zum Aufprägen von lichtbrechenden Gittern (25) auf wenigstens eine Seite der Folie (2), zweite und/oder dritte Zuführmittel (12, 14), die kontinuierlich zusätzliche optische Beläge (8, 10) auf einer beliebigen Seite der Folie (2) bereitstellen, und
Laminiermittel (16), die die zusätzlichen optischen Beläge (8, 10) nach dem Walzen auf die geprägte Folie (2) laminieren.

27. Vorrichtung nach Anspruch 26 mit einer Spule (6), die die Folie (2) im Wesentlichen kontinuierlich bereitstellt.

28. Vorrichtung nach einem der Ansprüche 26 bis 27 mit Schneidmitteln, die nach dem Laminieren der Folie (2) mit den zusätzlichen optischen Belägen (8, 10) einzelne Lichtleiter aus der Folie (2) ausschneiden.

29. Vorrichtung nach einem der Ansprüche 26 bis 28 mit Stanzmitteln, die nach dem Laminieren der Folie (2) mit den zusätzlichen optischen Belägen (8, 10) einzelne Lichtleiter aus der Belägen (2) ausstanzen.

30. Vorrichtung nach einem der Ansprüche 28 oder 29, bei der die Schneidmittel oder die genannten Stanzmittel in das Laminiermittel (16) integriert sind, wobei sie die Folie (2) während des Laminierens segmentieren.

## Revendications

1. Procédé de fabrication d'un guide de lumière (18), en particulier un guide de lumière d'éclairage arrière ou d'éclairage avant pour les interfaces d'utilisateur de dispositifs électroniques, dans lequel
un substrat de guidage de lumière est prévu sous la forme d'une feuille continue (2),
des grilles de diffraction (25) sont gaufrées sur au moins un côté de ladite feuille (2) par laminage et
des films optiques supplémentaires (8, 10) sont délivrés en continu depuis une bobine (12, 14) et stratifiés partiellement sur ladite feuille gaufrée (2) après ledit laminage.

2. Procédé selon la revendication 1, dans lequel lesdites grilles de diffraction (25) sont gaufrées dans ladite feuille (2) selon un motif continu.

3. Procédé selon l'une quelconque des revendications 1 ou 2, dans lequel ladite feuille (2) est délivrée depuis une bobine (16) pour être laminée en continu.

4. Procédé selon la revendication 1, dans lequel lesdits films optiques supplémentaires (8, 10) sont stratifiés partiellement sur ladite feuille gaufrée (2), par chauffage et/ou collage.

5. Procédé selon l'une quelconque des revendications 1 à 4, dans lequel lesdits films optiques (8, 10) sont stratifiés sur ladite feuille (2) au moins en partie le long des bords extérieurs de ladite feuille.

6. Procédé selon l'une quelconque des revendications 1 à 5, dans lequel lesdits films optiques (8, 10) sont stratifiés sur ladite feuille (2) au moins en partie sur les coins de segments de ladite feuille (2).

7. Procédé selon l'une quelconque des revendications 1 à 6, dans lequel ladite stratification comprend la stratification de films optiques supplémentaires (8, 10) sur au moins une face de ladite feuille (2).

8. Procédé selon l'une quelconque des revendications 1 à 7, dans lequel un premier film optique (8) est stratifié sur une première face de ladite feuille (2).

9. Procédé selon la revendication 8, dans lequel ledit premier film optique (8) est un film diffuseur ou un film de renforcement de la brillance.

10. Procédé selon l'une quelconque des revendications 1 à 9, dans lequel un deuxième film optique (10) est stratifié sur une deuxième face de ladite feuille (2).

11. Procédé selon la revendication 10, dans lequel ledit deuxième film optique (10) est un film réfléchissant.

12. Procédé selon l'une quelconque des revendications 1 à 11, dans lequel des guides individuels de lumière (24) sont séparés de ladite feuille (2) par estampage ou découpe.

13. Procédé selon l'une quelconque des revendications 1 à 12, dans lequel des guides individuels de lumière (2) sont séparés de ladite feuille (2) pendant la stratification.

14. Procédé selon l'une quelconque des revendications 1 à 13, dans lequel des grilles de diffraction (27) d'injection sont gaufrées dans ladite feuille (2) par ledit laminage de manière à permettre l'introduction de lumière provenant d'éléments d'éclairage qui émettent une lumière qui présente une certaine répartition angulaire en direction de ladite surface de ladite feuille et dans ladite feuille (2).

15. Procédé selon la revendication 14, dans lequel des perforations (26) sont découpées dans au moins l'un desdits films optiques (8, 10) aux positions desdites grilles de diffraction (27) d'injection pendant la segmentation desdits guides de lumière.

16. Procédé selon l'une quelconque des revendications 1 à 15, dans lequel des perforations (26) sont découpées dans au moins des parties des guides individuels de lumière en des positions où des éléments d'éclairage latéral doivent être placés pour permettre l'injection de lumière dans ledit guide de lumière par les éléments d'éclairage par le côté.

17. Procédé selon l'une quelconque des revendications 1 à 16, dans lequel ladite feuille (2) est enroulée à une vitesse comprise entre 0,1 et 100 m/min.

18. Procédé selon l'une quelconque des revendications 1 à 17, dans lequel lesdites grilles (25) sont gaufrées par impression offset en rotogravure ou flexographie.

19. Procédé selon l'une quelconque des revendications 1 à 18, dans lequel la hauteur desdites grilles (25) est comprise entre 0,1 et 1 µm.

20. Procédé selon l'une quelconque des revendications 1 à 19, dans lequel ladite feuille (2) et/ou lesdits films optiques (8, 10) contiennent au moins l'un des matériaux polycarbonate (PC), poly(acrylate de méthyle) (PMMA), poly(chlorure de vinyle) (PVC), polyéthylène (PE), poly(téréphtalate d'éthylène) (PET) ou polyester thermoplastique.

21. Procédé selon l'une quelconque des revendications 1 à 20, dans lequel ladite feuille (2) et/ou lesdits films optiques (8, 10) ont un indice de réfraction compris entre 1,3 et 1,8.

22. Procédé selon l'une quelconque des revendications 1 à 21, dans lequel la température de laminage est ajustée pour permettre le gaufrage desdites grilles (25) dans ladite feuille (2) à la vitesse de laminage.

23. Procédé selon l'une quelconque des revendications 1 à 22, dans lequel lesdites grilles de diffraction (25) sont gaufrées dans des parties de ladite feuille (2) et dans lequel des composants électroniques et/ou opto-électroniques (71-76) sont imprimés sur des parties de ladite feuille (2).

24. Procédé selon la revendication 23, dans lequel lesdits composants électroniques et/ou opto-électroniques (71-76) sont imprimés sur ladite feuille (2) par une opération de laminage supplémentaire et/ou une opération d'impression supplémentaire.

25. Procédé selon l'une quelconque des revendications 1 à 24, dans lequel des parties de ladite feuille (2) sont étirées de manière à être utilisées comme moyen de transport de signaux optiques et/ou de lumière vers des éléments de sortie (68).

26. Appareil de fabrication d'un guide de lumière, en particulier d'un guide de lumière d'éclairage arrière ou d'éclairage avant pour interfaces d'utilisateur de dispositifs électroniques, comprenant :
des premiers moyens d'alimentation (6) qui délivrent en continu un substrat de guidage de lumière qui présente la forme d'une feuille (2),
des moyens de laminage (4) qui gaufrent des grilles de diffraction (25) sur au moins une face de ladite feuille (2),
des deuxièmes et/ou des troisièmes moyens d'alimentation (12, 14) qui délivrent en continu des films optiques supplémentaires (8, 10) sur une face ou l'autre de ladite feuille (2) et
des moyens de stratification (16) qui stratifient lesdits films optiques supplémentaires (8, 10) sur ladite feuille gaufrée (2) après son laminage.

27. Appareil selon la revendication 26, doté d'une bobine (6) qui délivre ladite feuille (2) de manière essentiellement continue.

28. Appareil selon l'une quelconque des revendications 26 à 27, qui présente des moyens de découpe qui découpent des guides individuels de lumière dans ladite feuille (2) après la stratification de ladite feuille (2) avec lesdits films optiques supplémentaires (8, 10).

29. Appareil selon l'une quelconque des revendications 26 à 28, qui présente des moyens d'estampage qui estampent des guides individuels de lumière dans ladite feuille (2) après que ladite feuille (2) a été stratifiée avec lesdits films optiques supplémentaires (8, 10).

30. Appareil selon l'une quelconque des revendications 28 ou 29, dans lequel lesdits moyens de découpe ou lesdits moyens d'estampage sont intégrés dans lesdits moyens de stratification (16) pour segmenter ladite feuille (2) pendant sa stratification.
